# EUROPÄISCHE PATENTSCHRIFT

(11) **EP 4 639 125 B1**
(45) Veröffentlichungstag und Bekanntmachung des Hinweises auf die Patenterteilung: **15.07.2026**
(21) Anmeldenummer: 23820877.1
(22) Anmeldetag: 07.12.2023
(51) Int. Cl.: G01L 19/00, G01L 19/06

(54) **DRUCKMESSAUFNEHMER**
PRESSURE TRANSDUCER
TRANSDUCTEUR DE PRESSION

(30) Priorität: 19.12.2022 DE 102022133825
(43) Veröffentlichungstag der Anmeldung: 29.10.2025
(73) Patentinhaber: Endress+Hauser SE+Co. KG, 79689 Maulburg (DE)
(72) Erfinder: VOGEL, Alexander, 79199 Kirchzarten (DE); KOBER, Timo, 14482 Potsdam (DE); NIEDERMAYER, Alexander, 79664 Wehr (DE)
(74) Vertreter: Endress + Hauser Group Services (Deutschland) AG+Co. KG
(86) Internationale Anmeldenummer: PCT/EP2023/084704
(87) Internationale Veröffentlichungsnummer: WO 2024/132558

(56) Entgegenhaltungen:
- EP-A1- 3 855 149
- DE-A1- 102005 055 285
- US-A1- 2011 265 573

## Beschreibung

Die Erfindung bezieht sich auf einen Druckmessaufnehmer.

In der Druckmesstechnik sind Absolutdruck-, Differenzdruck- und Relativdruckmessaufnehmer bekannt. Absolutdruckmessaufnehmer bestimmen den vorherrschenden Druck absolut, d. h. in Bezug auf Vakuum, während Differenzdruckmessaufnehmer die Differenz zwischen zwei unterschiedlichen Drücken bestimmen. Bei Relativdruckmessaufnehmern wird der zu messende Druck gegenüber einem Referenzdruck bestimmt, wobei der in der Umgebung des Relativdruckmessaufnehmers vorherrschende Atmosphärendruck als Referenzdruck dient. Eine Vielzahl solcher Absolutdruck-, Differenzdruck- und Relativdruckmessaufnehmer wird von Firmen der Endress + Hauser-Gruppe hergestellt und vertrieben.

Druckmessaufnehmer dienen zur Messung des Drucks und/oder zur Steuerung, Regelung und/oder Automatisierung eines in der Anlage ablaufenden Prozesses. Druckmessgeräte werden in der Automatisierungstechnik in einer Vielzahl von Industriezweigen eingesetzt, z.B. in der Chemie und in der Lebensmittelindustrie, um nur einige wichtige Anwendungsgebiete zu nennen. Differenzdruckmessgeräte dienen insbesondere zur kontinuierlichen Messung von Druckdifferenzen in Messmedien, z.B. in Flüssigkeiten, Dämpfen, Gasen und Stäuben. Aus dem Differenzdruck kann beispielsweise der Füllstand eines Füllguts in einem Behälter oder der Durchfluss eines Messmediums durch eine Rohrleitung ermittelt werden.

Druck- und Differenzdruckmessaufnehmer weisen ein drucksensitives Element, einen sogenannten Drucksensor, auf, welcher auf zwei gegenüberliegenden Flächen mit jeweils einem ersten Druck und einem zweiten Druck beaufschlagt ist. Das Medium steht dabei in der Regel nicht in direktem Kontakt mit dem Drucksensor, sondern wird im Falle des Druckmessaufnehmer mittels einer und im Falle des Differenzdruckmessaufnehmers mittels zweier dem Prozess zugewandter, druckempfindlicher Membran(en) aufgenommen. Die jeweilige Membran weist ein ihr zugeordnetes Membranbett auf, welches zum Prägen der Membran und zur Begrenzung des Verschiebens der Membran im Überlastfall dient. Häufig wird zusätzlich eine Druckmittlerflüssigkeit eingesetzt, welche den auf die Membran wirkenden Druck des Mediums über einen Druckübertragungspfad an eine der beiden Flächen des Drucksensors weiterleitet.

Um die auch als Trennmembranen bezeichneten Membranen mit einer hinreichend großen hydraulischen Kapazität zu erzielen, werden diese gewöhnlich aus Stahlblechen bzw. Folien in Stärken von einigen 10 µm bis einigen 100 µm gefertigt. Mit dieser geringen Materialstärke geht jedoch ein gewisses Leckagerisiko einher, insbesondere dann, wenn die Trennmembranen abrasiven bzw. korrosiven Medien ausgesetzt sind.

Dieses Problem ist grundsätzlich bekannt und es gibt zahlreiche Ansätze eine Leckage zu diagnostizieren. So beschreiben beispielsweise DE 102 00 779 B4, EP 1 275 951 B1 und EP 0 838 672 A1 Vorrichtungen, bei denen Eigenschaften der Übertragungsflüssigkeit überwacht werden sollen. Nach Eintreten einer Leckage sollte es demnach zu einem Austausch zwischen der Übertragungsflüssigkeit und dem Messmedium kommen, was eine veränderte elektrische Leitfähigkeit bzw. Dielektrizitätskonstante bewirken sollte. Es zeigt sich jedoch, dass der bei einer Leckage einsetzende Medienaustausch im Wesentlichen durch Diffusion erfolgt und damit zu langsam ist, um in nützlicher Frist zu einer detektierbaren Veränderung einer Eigenschaft der in der Druckmittlerkammer enthaltenen Übertragungsflüssigkeit zu gelangen.

Andere Ansätze verfolgen ein Konzept, bei dem ein Doppelmembransystem eingesetzt wird, wobei in dem Zwischenraum zwischen den beiden Membranen ein Vakuum erzeugt wird. Steigt nun der Druck in dem Zwischenraum über einen Schwellenwert, so kann ein Bruch zumindest der ersten Membran detektiert werden. Nachteilig an diesem Ansatz ist, dass das Gesamtsystem der Membran steifer wird, dass die Fertigungskosten auf Grund der höheren Komplexität steigen und dass ein zusätzlicher Sensor benötigt wird, der den Druck im Zwischenraum überwacht.

Aus dem Stand der Technik sind ferner die EP 3 855 149 A1, die US 2011/265573 A1 und die DE 10 2005 055285 A1 bekannt geworden. Die EP 3 855 149 A1 offenbart ein Verfahren und eine Vorrichtung zur Überwachung einer Membran eines Drucksensors. Die US 2011/265573 A1 offenbart eine Vorrichtung zur Bestimmung und/oder Überwachung eines Druckes mit einem Druckwandler, welcher den Druck in ein elektrisches Signal umwandelt. Die DE 10 2005 055285 A1 offenbart einen Druckmessumformer mit Diagnosefunktion.

Der Erfindung liegt die Aufgabe zugrunde, hier Abhilfe zu schaffen.

Die Aufgabe wird erfindungsgemäß gelöst durch den Druckmessaufnehmer gemäß Patentanspruch 1.

Der erfindungsgemäße Druckmessaufnehmer umfasst zumindest:
einen Drucksensor mit einer Messmembran;
einen hydraulischen Druckmittler mit einem Druckmittlerkörper und einer Trennmembran, die unter Bildung einer Druckmittlerkammer zwischen der Trennmembran und dem Druckmittlerkörper mit letzterem verbunden ist, wobei die Trennmembran über die Druckmittlerkammer mit der Messmembran hydraulisch gekoppelt ist, so dass ein an der Trennmembran anliegender zu bestimmender Druck an die Messmembran weitergeleitet wird, wobei der Druckmessaufnehmer ferner eine Betriebs- und/oder Auswerteschaltung umfasst, die dazu eingerichtet ist, ein einer Auslenkung der Messmembran entsprechendes Druckmesssignal auszugeben,
wobei der Druckmessaufnehmer ferner eine Detektionseinheit umfasst, die dazu eingerichtet ist, aus dem Druckmesssignal ein Frequenzspektrum, insb. ein akustisches Frequenzspektrum des Druckmessaufnehmers zu erzeugen und zumindest ein Teilbereich des erzeugten Frequenzspektrum, insb. des erzeugten akustischen Frequenzspektrums mit zumindest einem Teilbereich eines für den Druckmessaufnehmer charakteristischen Frequenzspektrums, insb. eines charakteristischen akustischen Frequenzspektrums zu vergleichen und ein Indiz festzustellen, wenn zumindest der Teilbereich des erzeugten Frequenzspektrum, insb. des erzeugten akustischen Frequenzspektrums eine signifikante Abweichung zu dem zumindest einen Teilbereich des für den Druckmessaufnehmer charakteristischen Frequenzspektrums , insb. dem charakteristischen akustischen Frequenzspektrums des Druckmessaufnehmers aufweist, und ferner dieses Indiz als eine Leckage der Trennmembran zu deuten.

Erfindungsgemäß wird die Aufnahme und Auswertung eines Frequenzspektrums eines Druckmessaufnehmers vorgeschlagen. Bei dem Frequenzspektrum kann es sich bevorzugt um ein akustisches Frequenzspektrum handeln, welches in einem Bereich kleiner 200kHz, insb. kleiner 25 kHz, insb. im Bereich von 0-20 kHz, ganz besonders im Bereich von 5 Hz - 1 kHz liegt. Das Spektrum charakterisiert den Druckmessaufnehmer und stellt quasi einen Fingerabdruck des Druckmessaufnehmers dar. Eine Veränderung des Druckmessaufnehmers wirkt sich auf das Frequenzspektrum, insb. das akustische Frequenzspektrum aus. Dies wird sich erfindungsgemäß zu nutzen gemacht, um eine Leckage bzw. ein Bruch der Trennmembran zu detektieren.

Eine vorteilhafte Ausgestaltung des erfindungsgemäßen Druckmessaufnehmer kann vorsehen, dass die Detektionseinheit ferner dazu eingerichtet ist, ein einen Druckmesswert repräsentierenden Signalanteil des Druckmesssignals aus dem Druckmesssignal zu entfernen. Insbesondere kann die Ausgestaltung vorsehen, dass die Detektionseinheit ferner dazu eingerichtet ist, den den Druckmesswert repräsentierenden Signalanteil mittels eines Hochpassfilters aus dem Druckmesssignal zu entfernen. Ergänzend kann die Ausgestaltung vorsehen, dass der Hochpassfilter derartig ausgebildet ist, dass dieser eine Grenzfrequenz von einigen Hz, vorzugsweise eine Grenzfrequenz im Bereich von 3-7 Hz, besonders bevorzugt eine Grenzfrequenz von ca. 5 Hz aufweist.

Wiederum eine weitere vorteilhafte Ausgestaltung des erfindungsgemäßen Druckmessaufnehmer kann vorsehen, dass die Detektionseinheit ferner dazu eingerichtet ist, das Frequenzspektrum, insb. das akustische Frequenzspektrum des Druckmessaufnehmers aus dem Druckmesssignal, mittels einer Fourier-Analyse, insb. einer Fast-Fourier-Analyse zu erzeugen. Insbesondere kann die Ausgestaltung vorsehen, dass die Detektionseinheit ferner dazu eingerichtet ist, das Frequenzspektrum, insb. das akustische Frequenzspektrum des Druckmessaufnehmers durch ein, insb. schrittweises Aufsummieren aller Frequenzen des mittels der Fourier-Analyse erzeugten Spektrums zu erzeugen.

Eine weitere vorteilhafte Ausgestaltung des erfindungsgemäßen Druckmessaufnehmer kann vorsehen, dass die Detektionseinheit ferner dazu eingerichtet ist, das Frequenzspektrum, insb. das akustische Frequenzspektrum des Druckmessaufnehmers mittels einer Normalisierung zu normalisieren, so dass zumindest ein Teilbereich des normalisierten Frequenzspektrums, insb. des normalisierten akustischen Frequenzspektrums mit zumindest einem Teilbereich eines für den Druckmessaufnehmer charakteristischen normalisierten Frequenzspektrum, insb. eines normalisierten charakteristischen akustischen Frequenzspektrums verglichen wird und ein Indiz festgestellt wird, wenn zumindest der Teilbereich das erzeugten normalisierten Frequenzspektrums, insb. des normalisierten akustischen Frequenzspektrum eine signifikante Abweichung zu dem zumindest einen Teilbereich des charakteristischen normalisierten Frequenzspektrums, insb. des normalisierten charakteristischen akustischen Frequenzspektrums des Druckmessaufnehmers aufweist.

Eine weitere vorteilhafte Ausgestaltung des erfindungsgemäßen Druckmessaufnehmer kann vorsehen, dass die Detektionseinheit ferner dazu eingerichtet ist, das Frequenzspektrum, insb. das akustisches Frequenzspektrum des Druckmessaufnehmers aus dem Druckmesssignal mittels eines Equalizers in einem Frequenzbereich zu verstärken.

Eine weitere vorteilhafte Ausgestaltung des erfindungsgemäßen Druckmessaufnehmer kann vorsehen, dass die Detektionseinheit ferner dazu eingerichtet ist, das Indiz festzustellen, wenn das Frequenzspektrum, insb. das akustische Frequenzspektrum des Druckmessaufnehmers, insb. das aufsummierte Frequenzspektrum, ein Tiefpassverhalten als signifikante Abweichung zu dem charakteristischen Frequenzspektrum, insb. dem charakteristischen akustischen Frequenzspektrum des Druckmessaufnehmers aufweist.

Eine weitere vorteilhafte Ausgestaltung des erfindungsgemäßen Druckmessaufnehmers kann vorsehen, dass die Detektionseinheit dazu eingerichtet ist, in regelmäßigen Abständen aus dem Druckmesssignal das Frequenzspektrum, insb. das akustische Frequenzspektrum des Druckmessaufnehmers zu erzeugen.

Wiederum eine weitere vorteilhafte Ausgestaltung des erfindungsgemäßen Druckmessaufnehmers kann vorsehen, dass zur Erzeugung des charakteristischen Frequenzspektrums, insb. des charakteristischen akustischen Frequenzspektrums ein Prozessgeräusch, vorzugsweise ein Prozessgeräusch an einer Messstelle des Druckmessaufnehmers oder ein künstlich erzeugtes und/oder bekanntes Geräusch bzw. Töne dienen.

Wiederum eine weitere vorteilhafte Ausgestaltung des erfindungsgemäßen Druckmessaufnehmers kann vorsehen, dass die Messmembran eine erste hydraulische Kapazität dV1/dp und die Trennmembran eine zweite hydraulische Kapazität dV2/dp aufweisen, wobei vorzugsweise die zweite hydraulische Kapazität größer ist als die erste hydraulische Kapazität, und wobei die Trennmembran eine Gleichgewichtslage aufweist, bei welcher der Druck in der Druckmittlerkammer gleich dem Druck auf einer der Druckmittlerkammer abgewandten Außenseite der Trennmembran ist, wobei der Gleichgewichtslage ein Gleichgewichtsvolumen der Druckmittlerkammer entspricht, und wobei die Druckmittlerkammer in einem Betriebszustand des Druckmessaufnehmers ein Betriebsvolumen aufweist, das vom Gleichgewichtsvolumen abweicht, so dass eine Druckdifferenz zwischen einem Druck in Druckmittlerkammer und dem Druck an der Außenseite der Trennmembran nicht weniger als ein Schwellwert beträgt,

Die Erfindung wird anhand der nachfolgenden Zeichnungen näher erläutert. Es zeigt:
Fig. 1: eine Gesamtdarstellung eines Ausführungsbeispiels eines erfindungsgemäßen Druckmessaufnehmers,
Fig. 2: eine in der Detektionseinheit ablaufende bzw. implementierte Signalkette, und
Fig. 3: ein akustisches Spektrum des Druckmessaufnehmers, welches durch Aufsummieren aller Frequenzen des mittels einer Fourier-Analyse erzeugten Spektrums erzeugt wurde.

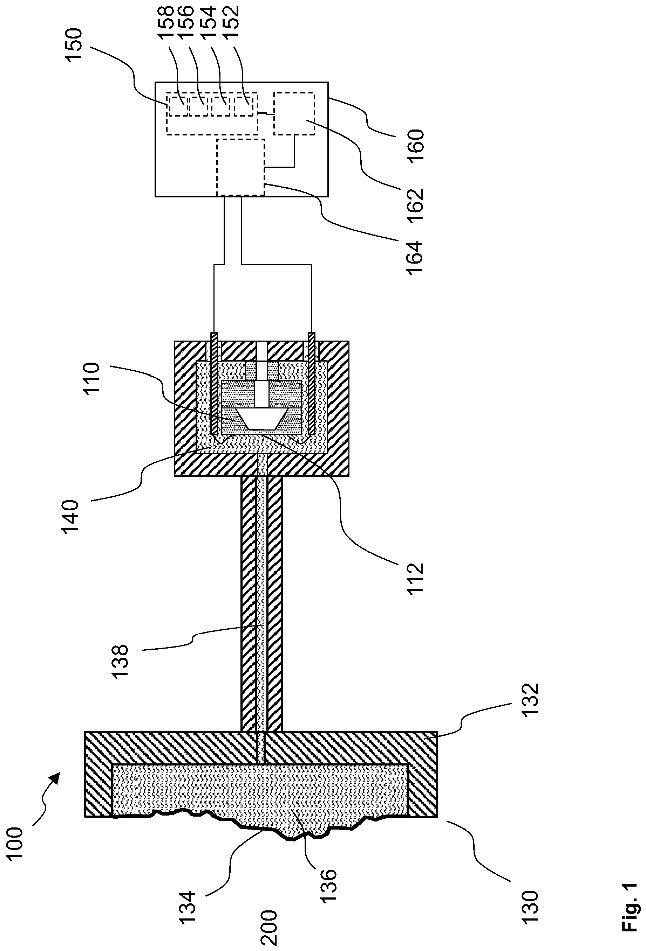

Der in Fig. 1 dargestellte Druckmessaufnehmer 100 umfasst einen Drucksensor, hier einen piezoresistiven Drucksensor 110 mit einer Messmembran 112, wobei der Drucksensor 110 Widerstandselemente in einer Brückenschaltung aufweist, um eine druckabhängige Verformung bzw. Auslenkung der Messmembran in ein elektrisches Signal zu wandeln. Anstelle des piezoresistiven Drucksensors kann auch ein kapazitiver Drucksensor vorgesehen sein, wobei in diesem Fall die Messmembran eine Elektrode aufweist, deren Kapazität gegenüber einer Elektrode an einem biegesteifen Gegenkörper ein Maß für die druckabhängige Verformung bzw. Auslenkung der Messmembran ist. Einzelheiten zu elektrischen Wandlern sind einem Fachmann auf dem Gebiet der Druckmesstechnik geläufig und brauchen hier nicht naher erläutert zu werden.

Der Druckmessaufnehmer 100 umfasst weiterhin einen hydraulischen Druckmittler 130 mit einem Druckmittlerkörper 132 und einer Trennmembran 134. Die Trennmembran 134 ist mit dem Druckmittlerkörper 132 entlang eines umlaufenden Randes gefügt, also verschweißt oder verlötet, so dass zwischen den beiden Fügepartnern die Druckmittlerkammer 136 gebildet ist. Von der Druckmittlerkammer 136 erstreckt sich ein Kanal 138 in eine Drucksensorkammer 140, in welcher der Drucksensor 110 angeordnet ist. Die Drucksensorkammer 140 ist über eine Übertragungsflüssigkeit mit der Druckmittlerkammer gekoppelt, so dass die Messmembran 112 mit der Trennmembran 134 hydraulisch gekoppelt ist. D.h., an der Messmembran 112 steht im Wesentlichen der über die Trennmembran 134 in die Druckmittlerkammer 136 eingeleitete Druck an.

Die Aufteilung des beschriebenen hydraulischen Systems in eine Drucksensorkammer 140 und eine Druckmittlerkammer 136 sowie einen die Kammern verbindenden Kanal ist zwar vorteilhaft aber nicht zwingend erforderlich. Um die Erfindung zu verwirklichen, kann der Drucksensor auch in der Druckmittlerkammer angeordnet sein.

Die Übertragungsflüssigkeit weist in aller Regel eine größere thermische Volumenausdehnung auf als die sie einschließenden Kammern und Kanäle. Dies führt im Ergebnis zu einem Volumenhub, der nicht durch Auslenkung der Sensormembran 112 sondern durch Auslenkung der Trennmembran 134 aufzunehmen ist. D.h., die Messmembran 112 weist eine erste hydraulische Kapazität dV1/dp auf, und die Trennmembran 134 weist eine zweite hydraulische Kapazität dV2/dp auf, wobei die zweite hydraulische Kapazität wesentlich größer ist als die erste hydraulische Kapazität.

Die Trennmembran 134 ist ein elastischer Körper, für den eine Gleichgewichtslage gegeben ist, bei welcher der Druck in der Druckmittlerkammer 136 gleich dem Druck auf einer der Druckmittlerkammer 136 abgewandten Außenseite der Trennmembran 134 ist. Der Gleichgewichtslage der Trennmembran 134 entspricht ein Gleichgewichtsvolumen der Druckmittlerkammer 136.

Es ist jedoch vorgesehen, dass die Druckmittlerkammer 136 in einem betriebsbereiten Zustand - kurz Betriebszustand - des Druckmessaufnehmers 100 ein Betriebsvolumen VB aufweist, das in dem Maße vom Gleichgewichtsvolumen V0 abweicht, dass eine Druckdifferenz ΔpB zwischen einem Druck in Druckmittlerkammer 136 und dem Druck an der Außenseite der 134 Trennmembran 134 nicht weniger als ein Schwellwert ΔpS von beispielsweise einigen 10 mbar, insbesondere von mindestens 40 mbar, ganz besonders von mindestens 60 mbar, ganz ganz besonders von ca. 70 mbar beträgt. Dies bewirkt, dass im Falle einer Leckage, Übertragungsflüssigkeit aus der Druckmittlerkammer 136 herausgedrückt wird, bis Druckausgleich zwischen der Druckmittlerkammer 136 und dem Volumen an der Außenseite Trennmembran 134 erfolgt ist. Als Ergebnis hiervon verändert sich insbesondere auch die aktuelle Lage der Trennmembran 134.

Zur Erzeugung eines Druckmesssignals, welches die Druckmesswerte umfasst, weist der Druckmessaufnehmer 100 eine Betriebs- und/oder Auswerteschaltung 160 auf, die dazu eingerichtet ist, ein einer Auslenkung der Messmembran 112 entsprechendes Druckmesssignal auszugeben. Hierzu kann die Betriebs- und/oder Auswerteschaltung bspw. einen Mikroprozessor 162 zum Verarbeiten von mittels eines ADC 164 digitalisierten Signalen des Drucksensors 110 aufweisen.

Erfindungsgemäß weist der Druckmessaufnehmer 100 weiterhin eine Detektionseinheit 150 auf, welche aus dem Druckmesssignal ein Frequenzspektrum, insb. ein akustisches Frequenzspektrum des Druckmessaufnehmers 100 erzeugt und das erzeugte akustische Frequenzspektrum mit einem für den Druckmessaufnehmer 100 charakteristischen akustischen Frequenzspektrum, insb. einem charakteristischen akustischen Frequenzspektrum vergleicht und ein Indiz für eine Leckage der Trennmembran 134 feststellt, wenn das erzeugte Frequenzspektrum, insb. das akustische Frequenzspektrum eine signifikante Abweichung zu dem charakteristischen Frequenzspektrum, insb. dem charakteristischen akustischen Frequenzspektrum des Druckmessaufnehmers 100 aufweist. Die Detektionseinheit 150 kann dabei, wie in Fig. 1 dargestellt, als Teil der Betriebs- und Auswertungsschaltung 160 ausgebildet sein, oder alternativ als separate Einheit ausgebildet sein. Beispielsweise kann die Detektionseinheit auch abgesetzt von dem Druckmessaufnehmer, z.B. in einer Cloud oder ähnlichem, ausgebildet sein.

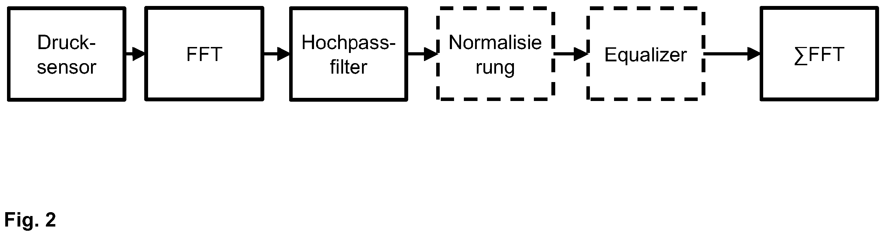

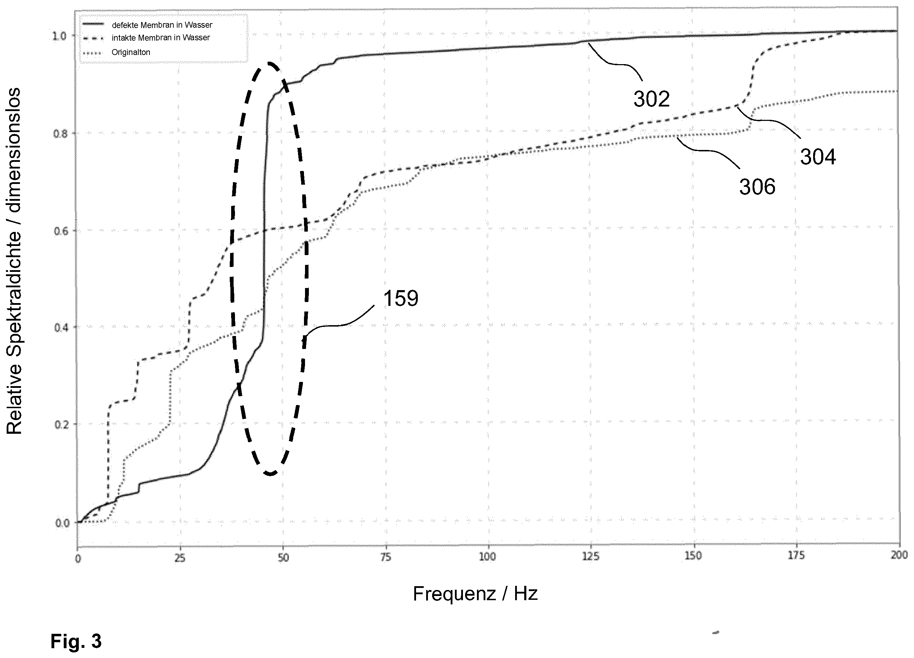

Weitere Einzelheiten zu der Detektionseinheit 150 und der damit einhergehenden Signalverarbeitung sind in den Figuren 2 und 3 dargestellt und werden nun erläutert.

Fig. 2 zeigt ein Beispiel einer, insb. in der Detektionseinheit 150 ablaufenden, Signalkette. Gemäß dem in Fig. 2 dargestellten Ausführungsbeispiel wird in einem ersten Schritt, dass von dem Drucksensor kommende Druckmesssignal, welches vorzugsweise ein digitales Signal darstellen kann, einer Fourier-Analyse 158, insb. einer Fast-Fourier-Analyse (kurz: FFT) unterzogen. Anschließend wird der den eigentlichen Druckmesswert repräsentierende Signalanteil entfernt. Dies kann bspw. mittels eines Hochpassfilters erfolgen. Der Hochpassfilter 152 kann mit einer Grenzfrequenz von einigen Hz realisiert werden. Als besonders vorteilhaft hat sich eine Grenzfrequenz, die im Bereich von 3-7 Hz liegt, z.B. ca. 5Hz, herausgestellt. Alternativ zur Hochpassfilterung kann der den eigentlichen Druckmesswert repräsentierende Signalanteil auch durch eine gleitende Mittelwertbildung entfernt werden.

Dieses Signal wird anschließend in einem weiteren optionalen Schritt durch eine Normalisierungseinheit 154 der Detektionseinheit 150 normalisiert, d.h. es wird ein, vorzugsweise konstanter Verstärkungsfaktors auf das Signal über den gesamten Frequenzbereich angewendet, um die Amplitude auf einen Zielpegel, z.B. "1", zu bringen. In einem daran anschließenden optionalen Schritt wird das hochpassgefilterte, normalisierte Signal mittels eines Equalizers 156 in einem bestimmten Frequenzbereich verstärkt. Der Frequenzbereich, in dem eine Verstärkung durch den Equalizer erfolgt, ist dabei abhängig vom Messsystemaufbau, wie z.B. der Messmembrangröße, etc.. Durch die Verstärkung ist es möglich, dass nicht der gesamte Frequenzbereich betrachtet werden muss, sondern nur der Bereich, bei dem sich eine Änderung des Übertragungsverhaltens bei Membranbruch für den entsprechenden Messsystemaufbau zeigt. Auch wenn gemäß dem Ausführungsbeispiel die Normalisierung vor der Verstärkung durch den Equalizer erfolgt, ist dies nicht zwingend erforderlich, sondern kann auch in umgekehrter Reihenfolge erfolgen.

Wiederum in einem daran anschließenden Schritt können alle Frequenzen des erzeugten Frequenzspektrums, insb. schrittweise aufsummiert werden. Fig. 3 zeigt ein solches aufsummiertes Frequenzspektrum für zwei verschiedene Druckmessaufnehmer. Ein erstes aufsummiertes Frequenzspektrum 302 stammt dabei von einem Druckmessaufnehmer mit einer gebrochenen Trennmembran 134 und ein zweites aufsummiertes Frequenzspektrum 304 von einem Druckmessaufnehmer 100 mit einer intakten bzw. nicht gebrochenen Trennmembran 134. Diese zweite aufsummierte Frequenzspektrum dient als charakteristisches Frequenzspektrum, insb. charakteristisches akustisches Frequenzspektrum.

Zur Erzeugung des charakteristisch Frequenzspektrums, insb. des charakteristischen akustischen Frequenzspektrums 304 kann bspw. ein sowieso ständig vorhandenes Prozessgeräusch, insb. an der Messstelle des Druckmessaufnehmers oder ein künstlich erzeugtes und/oder bekanntes Geräusch bzw. Töne dienen. Hierzu ist in Fig. 3 ein drittes Frequenzspektrum 306 dargestellt, welches als ein künstlich erzeugtes Geräusch dient. Die Summenkurve 304 kann quasi als ein Fingerabdruck des mit dem Drucksensor aufgenommenen Geräusches 306 angesehen werden.

Gut zu erkennen in Fig. 3 ist, dass bei dem ersten Frequenzspektrum auftretende Tiefpassverhalten, welches in dem Beispiel hier bei knapp unter 50 Hz, ca. 48 Hz, auftritt. Das Tiefpassverhalten muss dabei nicht, wie in Fig. 3 dargestellt, bei ca. 50 Hz liegen, sondern ist abhängig vom Messsystemaufbau, wie bspw. einem Leitungsdurchmesser der Leitung in die der Druckmessaufnehmer eingebracht ist oder auch eine Membrangröße der Messmembran des Druckmessaufnehmers. Dieses Tiefpassverhalten wird von der Detektionseinheit 150 herangezogen, um ein Indiz festzustellen, dass das erzeugte Frequenzspektrum, insb. das akustische Frequenzspektrum eine signifikante Abweichung zu dem charakteristischen Frequenzspektrum, insb. dem charakteristischen akustischen Frequenzspektrum des Druckmessaufnehmers 100 aufweist und dieses Indiz als eine Leckage bzw. ein Bruch der Trennmembran 112 zu deuten.

## Patentansprüche

1. Druckmessaufnehmer (100), zumindest umfassend:
einen Drucksensor (110) mit einer Messmembran (112);
einen hydraulischen Druckmittler (130) mit einem Druckmittlerkörper (132) und einer Trennmembran (134), die unter Bildung einer Druckmittlerkammer (136) zwischen der Trennmembran (134) und dem Druckmittlerkörper (132) mit letzterem verbunden ist, wobei die Trennmembran (134) über die Druckmittlerkammer (136) mit der Messmembran (112) hydraulisch gekoppelt ist, so dass ein an der Trennmembran anliegender zu bestimmender Druck an die Messmembran weitergeleitet wird;
wobei der Druckmessaufnehmer (100) ferner eine Betriebs- und/oder Auswerteschaltung (160) umfasst, die dazu eingerichtet ist, ein einer Auslenkung der Messmembran entsprechendes Druckmesssignal auszugeben,
**dadurch gekennzeichnet, dass**
der Druckmessaufnehmer (100) ferner eine Detektionseinheit (15) umfasst, die dazu eingerichtet ist, aus dem Druckmesssignal ein Frequenzspektrum (302), insb. ein akustisches Frequenzspektrum des Druckmessaufnehmers (100) zu erzeugen und zumindest ein Teilbereich des erzeugten Frequenzspektrum (302), insb. des erzeugten akustischen Frequenzspektrums mit zumindest einem Teilbereich eines für den Druckmessaufnehmer (100) charakteristischen Frequenzspektrums (304), insb. eines charakteristischen akustischen Frequenzspektrums zu vergleichen und ein Indiz festzustellen, wenn zumindest der Teilbereich des erzeugten Frequenzspektrum (302), insb. des erzeugten akustischen Frequenzspektrums eine signifikante Abweichung zu dem zumindest einen Teilbereich des für den Druckmessaufnehmer (100) charakteristischen Frequenzspektrums (304), insb. dem charakteristischen akustischen Frequenzspektrums des Druckmessaufnehmers (100) aufweist, und ferner dieses Indiz als eine Leckage der Trennmembran (134) zu deuten.

2. Druckmessaufnehmer nach dem vorhergehenden Anspruch, wobei die Detektionseinheit (150) ferner dazu eingerichtet ist, ein einen Druckmesswert repräsentierender Signalanteil des Druckmesssignals aus dem Druckmesssignal zu entfernen.

3. Druckmessaufnehmer nach dem vorhergehenden Anspruch, wobei die Detektionseinheit (150) ferner dazu eingerichtet ist, den den Druckmesswert repräsentierenden Signalanteil mittels eines Hochpassfilters (152) aus dem Druckmesssignal zu entfernen.

4. Druckmessaufnehmer nach dem vorhergehenden Anspruch, wobei der Hochpassfilter (152) derartig ausgebildet ist, dass dieser eine Grenzfrequenz von einigen Hz, vorzugsweise eine Grenzfrequenz im Bereich von 3-7 Hz, besonders bevorzugt eine Grenzfrequenz von ca. 5 Hz aufweist.

5. Druckmessaufnehmer nach einem oder mehreren der vorhergehenden Ansprüche, wobei die Detektionseinheit ferner dazu eingerichtet ist, das Frequenzspektrum (302), insb. das akustische Frequenzspektrum des Druckmessaufnehmers (100) aus dem Druckmesssignal mittels einer Fourier-Analyse (158), insb. einer Fast-Fourier-Analyse zu erzeugen.

6. Druckmessaufnehmer nach dem vorhergehenden Anspruch, wobei die Detektionseinheit ferner dazu eingerichtet ist, das Frequenzspektrum (302), insb. das akustische Frequenzspektrum des Druckmessaufnehmers (100) durch ein, insb. schrittweises Aufsummieren aller Frequenzen des mittels der Fourier-Analyse erzeugten Spektrums zu erzeugen.

7. Druckmessaufnehmer nach einem oder mehreren der vorhergehenden Ansprüche, wobei die Detektionseinheit (150) ferner dazu eingerichtet ist, das Frequenzspektrum (302), insb. das akustische Frequenzspektrum des Druckmessaufnehmers (100) mittels einer Normalisierung (154) zu normalisieren, so dass zumindest ein Teilbereich des normalisierten Frequenzspektrums, insb. des normalisierten akustischen Frequenzspektrums (302) mit zumindest einem Teilbereich eines für den Druckmessaufnehmer (100) charakteristischen normalisierten Frequenzspektrum, insb. eines normalisierten charakteristischen akustischen Frequenzspektrums (304) verglichen wird und ein Indiz festgestellt wird, wenn zumindest der Teilbereich das erzeugten normalisierten Frequenzspektrums (302), insb. des normalisierten akustischen Frequenzspektrum eine signifikante Abweichung zu dem zumindest einen Teilbereich des charakteristischen normalisierten Frequenzspektrums (304), insb. des normalisierten charakteristischen akustischen Frequenzspektrums des Druckmessaufnehmers (100) aufweist.

8. Druckmessaufnehmer nach einem oder mehreren der vorhergehenden Ansprüche, wobei die Detektionseinheit ferner dazu eingerichtet ist, das Frequenzspektrum (302), insb. das akustische Frequenzspektrum des Druckmessaufnehmers (100) aus dem Druckmesssignal mittels eines Equalizers (156) in einem Frequenzbereich zu verstärken.

9. Druckmessaufnehmer nach einem oder mehreren der vorhergehenden Ansprüche, wobei die Detektionseinheit (150) ferner dazu eingerichtet ist, das Indiz festzustellen, wenn das Frequenzspektrum, insb. das akustische Frequenzspektrum des Druckmessaufnehmers, insb. das aufsummierte Frequenzspektrum, ein Tiefpassverhalten (159) als signifikante Abweichung zu dem charakteristischen Frequenzspektrum, insb. dem charakteristischen akustischen Frequenzspektrum des Druckmessaufnehmers (100) aufweist.

10. Druckmessaufnehmer nach einem oder mehreren der vorhergehenden Ansprüche, wobei die Detektionseinheit (150) dazu eingerichtet ist, in regelmäßigen Abständen aus dem Druckmesssignal das Frequenzspektrum, insb. das akustische Frequenzspektrum des Druckmessaufnehmers (100) zu erzeugen.

11. Druckmessaufnehmer nach einem oder mehreren der vorhergehenden Ansprüche, wobei zur Erzeugung des charakteristischen Frequenzspektrums (306), insb. des charakteristischen akustischen Frequenzspektrums (306) ein Prozessgeräusch, vorzugsweise ein Prozessgeräusch an einer Messstelle des Druckmessaufnehmers (100) oder ein künstlich erzeugtes und/oder bekanntes Geräusch bzw. Töne dient.

12. Druckmessaufnehmer nach einem oder mehreren der vorhergehenden Ansprüche, wobei die Messmembran (112) eine erste hydraulische Kapazität dV1/dp und die Trennmembran (134) eine zweite hydraulische Kapazität dV2/dp aufweisen, wobei vorzugsweise die zweite hydraulische Kapazität größer ist als die erste hydraulische Kapazität, und wobei die Trennmembran (134) eine Gleichgewichtslage aufweist, bei welcher der Druck in der Druckmittlerkammer (136) gleich dem Druck auf einer der Druckmittlerkammer (136) abgewandten Außenseite der Trennmembran (134) ist, wobei der Gleichgewichtslage ein Gleichgewichtsvolumen der Druckmittlerkammer (136) entspricht, und wobei die Druckmittlerkammer (136) in einem Betriebszustand des Druckmessaufnehmers (100) ein Betriebsvolumen aufweist, das vom Gleichgewichtsvolumen abweicht, so dass eine Druckdifferenz zwischen einem Druck in Druckmittlerkammer (100) und dem Druck an der Außenseite der Trennmembran (134) nicht weniger als ein Schwellwert beträgt.

## Claims

1. A pressure measuring transducer (100), at least comprising:
a pressure sensor (110) having a measuring diaphragm (112);
a hydraulic pressure transmitter (130) having a pressure transmitter body (132) and an isolating diaphragm (134), which is connected to the pressure transmitter body (132) so as to form a pressure transmitter chamber (136) between the isolating diaphragm (134) and the pressure transmitter body (132), wherein the isolating diaphragm (134) is hydraulically coupled to the measuring diaphragm (112) via the pressure transmitter chamber (136), such that a pressure to be determined applied to the isolating diaphragm is transmitted to the measuring diaphragm;
wherein the pressure measuring transducer (100) further comprises an operating and/or evaluation circuit (160) configured to output a pressure measurement signal corresponding to a deflection of the measuring diaphragm,
**characterized in that**
the pressure measuring transducer (100) further comprises a detection unit (150) configured to generate, from the pressure measurement signal, a frequency spectrum (302), in particular an acoustic frequency spectrum of the pressure measuring transducer (100), and to compare at least a sub-range of the generated frequency spectrum (302), in particular of the generated acoustic frequency spectrum, with at least a sub-range of a characteristic frequency spectrum (304) characteristic for the pressure measuring transducer (100), in particular a characteristic acoustic frequency spectrum, and to determine an indication if at least the sub-range of the generated frequency spectrum (302), in particular of the generated acoustic frequency spectrum, exhibits a significant deviation from the at least one sub-range of the characteristic frequency spectrum (304), in particular the characteristic acoustic frequency spectrum of the pressure measuring transducer (100), and to interpret this indication as a leakage of the isolating diaphragm (134).

2. The pressure measuring transducer according to the preceding claim,
wherein the detection unit (150) is further configured to remove a signal portion of the pressure measurement signal representing a pressure measurement value from the pressure measurement signal.

3. The pressure measuring transducer according to the preceding claim,
wherein the detection unit (150) is further configured to remove the signal portion representing the pressure measurement value from the pressure measurement signal by means of a high-pass filter (152).

4. The pressure measuring transducer according to the preceding claim,
wherein the high-pass filter (152) is designed such that it has a cut-off frequency of several Hz, preferably a cut-off frequency in the range of 3-7 Hz, particularly preferably a cut-off frequency of approximately 5 Hz.

5. The pressure measuring transducer according to one or more of the preceding claims, wherein the detection unit is further configured to generate the frequency spectrum (302), in particular the acoustic frequency spectrum of the pressure measuring transducer (100), from the pressure measurement signal by means of a Fourier analysis (158), in particular a Fast Fourier Transform (FFT).

6. The pressure measuring transducer according to the preceding claim,
wherein the detection unit is further configured to generate the frequency spectrum (302), in particular the acoustic frequency spectrum, by cumulatively summing all frequencies of the spectrum generated by means of the Fourier analysis.

7. The pressure measuring transducer according to one or more of the preceding claims, wherein the detection unit (150) is further configured to normalize the frequency spectrum (302), in particular the acoustic frequency spectrum of the pressure measuring transducer (100), by means of a normalization (154), such that at least a sub-range of the normalized frequency spectrum, in particular of the normalized acoustic frequency spectrum (302), is compared with at least a sub-range of a characteristic normalized frequency spectrum, in particular a normalized characteristic acoustic frequency spectrum (304), and an indication is determined if at least the sub-range of the generated normalized frequency spectrum (302), in particular of the normalized acoustic frequency spectrum, exhibits a significant deviation from the at least one sub-range of the characteristic normalized frequency spectrum (304), in particular the normalized characteristic acoustic frequency spectrum of the pressure measuring transducer (100).

8. The pressure measuring transducer according to one or more of the preceding claims, wherein the detection unit is further configured to amplify the frequency spectrum (302), in particular the acoustic frequency spectrum of the pressure measuring transducer (100), in a frequency range by means of an equalizer (156).

9. The pressure measuring transducer according to one or more of the preceding claims, wherein the detection unit (150) is further configured to determine the indication if the frequency spectrum, in particular the acoustic frequency spectrum of the pressure measuring transducer, in particular the cumulatively summed frequency spectrum, exhibits a low-pass behavior (159) as a significant deviation from the characteristic frequency spectrum, in particular the characteristic acoustic frequency spectrum of the pressure measuring transducer (100).

10. The pressure measuring transducer according to one or more of the preceding claims, wherein the detection unit (150) is configured to generate the frequency spectrum, in particular the acoustic frequency spectrum of the pressure measuring transducer (100), from the pressure measurement signal at regular intervals.

11. The pressure measuring transducer according to one or more of the preceding claims, wherein a process noise, preferably a process noise at a measuring point of the pressure measuring transducer (100), or an artificially generated and/or known noise or tones is used to generate the characteristic frequency spectrum (306), in particular the characteristic acoustic frequency spectrum (306).

12. The pressure measuring transducer according to one or more of the preceding claims, wherein the measuring diaphragm (112) has a first hydraulic capacitance dV1/dp and the isolating diaphragm (134) has a second hydraulic capacitance dV2/dp, wherein preferably the second hydraulic capacitance is greater than the first hydraulic capacitance, and wherein the isolating diaphragm (134) has an equilibrium position at which the pressure in the pressure transmitter chamber (136) is equal to the pressure on an outer side of the isolating diaphragm (134) facing away from the pressure transmitter chamber (136), wherein the equilibrium position corresponds to an equilibrium volume of the pressure transmitter chamber (136), and wherein the pressure transmitter chamber (136) has, in an operating state of the pressure measuring transducer (100), an operating volume that deviates from the equilibrium volume such that a pressure difference between a pressure in the pressure transmitter chamber (136) and the pressure on the outer side of the isolating diaphragm (134) is not less than a threshold value.

## Revendications

1. Transducteur de mesure de pression (100), comprenant au moins :
un capteur de pression (110) avec une membrane de mesure (112) ;
un transmetteur de pression hydraulique (130) comprenant un corps de transmetteur (132) et une membrane de séparation (134), laquelle est reliée au corps de transmetteur (132) en formant une chambre de transmetteur de pression (136) entre la membrane de séparation (134) et le corps de transmetteur (132), la membrane de séparation (134) étant couplée hydrauliquement à la membrane de mesure (112) via la chambre de transmetteur de pression (136), de sorte qu'une pression à déterminer appliquée à la membrane de séparation est transmise à la membrane de mesure ;
le transducteur de mesure de pression (100) comprenant en outre un circuit de fonctionnement et/ou d'évaluation (160) configuré pour délivrer un signal de mesure de pression correspondant à une déflexion de la membrane de mesure,
**caractérisé en ce que**
le transducteur de mesure de pression (100) comprend en outre une unité de détection (150) configurée pour générer, à partir du signal de mesure de pression, un spectre de fréquences (302), en particulier un spectre acoustique de fréquences du transducteur de mesure de pression (100), et pour comparer au moins une sous-plage du spectre de fréquences généré (302), en particulier du spectre acoustique généré, avec au moins une sous-plage d'un spectre de fréquences caractéristique (304) du transducteur de mesure de pression (100), en particulier un spectre acoustique caractéristique, et pour déterminer un indice lorsque ladite sous-plage du spectre de fréquences généré (302), en particulier du spectre acoustique généré, présente une divergence significative par rapport à ladite sous-plage du spectre de fréquences caractéristique (304), en particulier du spectre acoustique caractéristique du transducteur de mesure de pression (100), et pour interpréter cet indice comme une fuite de la membrane de séparation (134).

2. Transducteur de mesure de pression selon la revendication précédente,
dans lequel l'unité de détection (150) est en outre configurée pour supprimer du signal de mesure de pression une composante de signal représentant une valeur de pression mesurée.

3. Transducteur de mesure de pression selon la revendication précédente,
dans lequel l'unité de détection (150) est en outre configurée pour supprimer ladite composante de signal au moyen d'un filtre passe-haut (152).

4. Transducteur de mesure de pression selon la revendication précédente,
dans lequel le filtre passe-haut (152) est conçu de manière à présenter une fréquence de coupure de quelques Hz, de préférence dans une plage de 3 à 7 Hz, particulièrement préférée d'environ 5 Hz.

5. Transducteur de mesure de pression selon l'une ou plusieurs des revendications précédentes,
dans lequel l'unité de détection est configurée pour générer le spectre de fréquences (302), en particulier le spectre acoustique de fréquences du transducteur (100), à partir du signal de mesure de pression au moyen d'une analyse de Fourier (158), en particulier une transformée de Fourier rapide (FFT).

6. Transducteur de mesure de pression selon la revendication précédente,
dans lequel l'unité de détection est configurée pour générer le spectre de fréquences (302), en particulier le spectre acoustique de fréquences, par sommation cumulative de toutes les fréquences du spectre généré au moyen de l'analyse de Fourier.

7. Transducteur de mesure de pression selon l'une ou plusieurs des revendications précédentes,
dans lequel l'unité de détection (150) est en outre configurée pour normaliser le spectre de fréquences (302), en particulier le spectre acoustique de fréquences du transducteur (100) au moyen d'une normalisation (154), de sorte qu'au moins une sous-plage du spectre de fréquences normalisé, en particulier du spectre acoustique normalisé, est comparée à au moins une sous-plage d'un spectre de fréquences caractéristique normalisé (304), en particulier un spectre acoustique caractéristique normalisé, et un indice est déterminé lorsque ladite sous-plage du spectre de fréquences normalisé (302), en particulier du spectre acoustique normalisé, présente une divergence significative par rapport à ladite sous-plage du spectre caractéristique normalisé (304), en particulier du spectre acoustique caractéristique normalisé du transducteur (100).

8. Transducteur de mesure de pression selon l'une ou plusieurs des revendications précédentes,
dans lequel l'unité de détection est configurée pour amplifier le spectre de fréquences (302), en particulier le spectre acoustique de fréquences du transducteur (100), dans une plage de fréquences au moyen d'un égaliseur (156).

9. Transducteur de mesure de pression selon l'une ou plusieurs des revendications précédentes,
dans lequel l'unité de détection (150) est configurée pour déterminer ledit indice lorsque le spectre de fréquences, en particulier le spectre acoustique de fréquences, en particulier le spectre cumulé, présente un comportement de passe-bas (159) en tant que divergence significative par rapport au spectre de fréquences caractéristique, en particulier au spectre acoustique caractéristique du transducteur (100).

10. Transducteur de mesure de pression selon l'une ou plusieurs des revendications précédentes,
dans lequel l'unité de détection (150) est configurée pour générer le spectre de fréquences, en particulier le spectre acoustique de fréquences du transducteur (100), à partir du signal de mesure de pression à intervalles réguliers.

11. Transducteur de mesure de pression selon l'une ou plusieurs des revendications précédentes,
dans lequel un bruit de procédé, de préférence au point de mesure du transducteur (100), ou un bruit et/ou des tonalités artificiellement générés et/ou connus, sont utilisés pour générer le spectre de fréquences caractéristique (306), en particulier le spectre acoustique caractéristique (306).

12. Transducteur de mesure de pression selon l'une ou plusieurs des revendications précédentes,
dans lequel la membrane de mesure (112) présente une première capacité hydraulique dV1/dp et la membrane de séparation (134) une deuxième capacité hydraulique dV2/dp, la deuxième capacité hydraulique étant de préférence supérieure à la première, et la membrane de séparation (134) présentant une position d'équilibre dans laquelle la pression dans la chambre de transmetteur de pression (136) est égale à la pression sur une face externe de la membrane de séparation (134) opposée à ladite chambre, ladite position d'équilibre correspondant à un volume d'équilibre de la chambre (136), la chambre de transmetteur présentant, en fonctionnement du transducteur (100), un volume de fonctionnement différent du volume d'équilibre, de sorte qu'une différence de pression entre la pression dans la chambre (136) et celle à l'extérieur de la membrane (134) n'est pas inférieure à une valeur seuil.
